# EUROPEAN PATENT APPLICATION

(11) **EP 3 327 528 A1**
(43) Date of publication of application: **30.05.2018**
(21) Application number: 17191561.4
(22) Date of filing: 18.09.2017
(51) Int. Cl.: G05B 23/02, G06F 11/07, G06Q 10/00

(54) **INFORMATION PROCESSING APPARATUS, INFORMATION PROCESSING SYSTEM, INFORMATION PROCESSING METHOD, AND INFORMATION PROCESSING PROGRAM**

(30) Priority: 29.11.2016 JP 2016231673
(71) Applicant: Omron Corporation, Kyoto-shi, Kyoto 600-8530 (JP)
(72) Inventor: ISHIHARA, Hiromi, Kyoto-shi, Kyoto 600-8530 (JP); KANESHIGE, Naruhiko, Kyoto-shi, Kyoto 600-8530 (JP); KAWAKAMI, Fumio, Kyoto-shi, Kyoto 600-8530 (JP)
(74) Representative: Horn Kleimann Waitzhofer Patentanwälte PartG mbB

(57) **Abstract**

Provided is an information processing apparatus that is able to store reference destinations within a memory that are accessed at the time of dealing with repair work carried out after a malfunction. A programmable display device, which is an example of the information processing apparatus, is provided with an access unit configured to access information within an external storage device, a detection unit for detecting an event indicating a phenomenon that has occurred in a production apparatus, and a monitoring unit for monitoring the access destination within the storage device that is referenced by the access unit after a predetermined event is detected by the detection unit, and storing the access destination in a storage device in association with the predetermined event.

## Description

### FIELD

This disclosure relates to a technology for storing access destinations within a storage device that are referenced by a control device.

### BACKGROUND

In recent years, in the field of FA (Factory Automation), the configuration of production apparatuses has become complex, making it difficult to pinpoint the cause of malfunctions of production apparatuses. Thus, a self-diagnostic technology for automatically diagnosing the cause of a malfunction, the location of the malfunction, the resolution method and the like has been developed.

In relation to this technology, JP 2008-015568 (Patent Document 1) discloses a maintenance system that accumulates, as a database, self-diagnostic results obtained from a management device that has a self-diagnostic function and reports an analysis result of the database to a serviceperson. The maintenance system reports the location of the malfunction, the resolution method and the like as the analysis result.

JP 2008-015568A is an example of background art.

Since the configuration of production apparatuses has become increasingly complex, a repair person is often not able to deal with a malfunction, merely by checking the diagnostic results of the self-diagnostic function. In particular, in the case where the repair person has little experience, this problem is markedly evident. Also, because an apparatus having a self-diagnostic function is expensive, many apparatuses are also not equipped with a self-diagnostic function. In such cases, the repair person pinpoints the cause of the malfunction of the production apparatus, based on his or her own experience and knowhow.

As an example of a repair mode, the repair person uses a repair tool having a memory watch function. The repair person adds a reference destination within a memory in such a repair tool, and judges whether each configuration within the production apparatus is operating normally by checking the value in the memory at the reference destination. At this time, the reference destination within the memory that the repair person adds is dependent on his or her own experience and knowhow. If the repair process at the time of such malfunctions is shared between repair persons, even a repair person with little experience will be able to deal with various malfunctions. Accordingly, it is desired to store reference destinations within a memory that are accessed at the time of dealing with repair work carried out after a malfunction.

### SUMMARY

According to one aspect, an information processing apparatus includes an access unit configured to access information within an external first storage device, a detection unit for detecting an event indicating a phenomenon that has occurred in a production apparatus, and a monitoring unit for monitoring an access destination within the first storage device that is referenced by the access unit after a predetermined event is detected by the detection unit, and storing the access destination in an internal or external second storage device in association with the predetermined event.

Preferably, the information processing apparatus further includes a display unit for displaying, in a case where a troubleshoot for the predetermined event is executed, the access destination associated with the predetermined event as the troubleshoot.

Preferably, the information processing apparatus further includes an evaluation acceptance unit for accepting an evaluation of the troubleshoot. Also, preferably, the display unit further displays the evaluation of the troubleshoot.

Preferably, the display unit, in a case where there are a plurality of troubleshoots for the predetermined event, displays the plurality of troubleshoots in order of the evaluations.

Preferably, the display unit further displays a reference frequency of the troubleshoot.

Preferably, the display unit, in a case where there are a plurality of troubleshoots for the predetermined event, displays the plurality of troubleshoots in order of the reference frequencies.

Preferably, the information processing apparatus further includes a skill acceptance unit for accepting input of a skill of a user that accesses the first storage device after the predetermined event is detected. Also, preferably, the monitoring unit further stores the accepted skill in the second storage device in association with the predetermined event and the access destination.

According to another aspect, an information processing system includes a plurality of first information processing apparatuses, in particular configured as described above, and a second information processing apparatus configured to be communicable with each of the plurality of first information processing apparatuses. Each of the plurality of first information processing apparatuses includes an access unit configured to access information within an external first storage device, a detection unit for detecting an event indicating a phenomenon that has occurred in a production apparatus, a monitoring unit for monitoring an access destination within the first storage device that is referenced by the access unit after a predetermined event is detected by the detection unit, and a communication unit for transmitting the access destination to the second information processing apparatus in association with the predetermined event. The second information processing apparatus includes a second storage device for storing the access destination received from each of the plurality of first information processing apparatuses and the predetermined event.

According to another aspect, an information processing method of in an information processing apparatus includes the steps of detecting an event indicating a phenomenon that has occurred in a production apparatus, accessing information within a first storage device that is external to the information processing apparatus, monitoring an access destination within the first storage device that is accessed in the step of accessing after a predetermined event is detected in the step of detecting, and storing the access destination in a second storage device that is internal or external to the information processing apparatus in association with the predetermined event.

According to another aspect, an information processing program that is executed by an information processing apparatus causes the information processing apparatus to execute the steps of detecting an event indicating a phenomenon that has occurred in a production apparatus, accessing information within a first storage device that is external to the information processing apparatus, monitoring an access destination within the first storage device that is accessed in the step of accessing after a predetermined event is detected in the step of detecting, and storing the access destination in a second storage device that is internal or external to the information processing apparatus in association with the predetermined event.

In one aspect, reference destinations within a memory that are accessed at the time of dealing with repair work carried out after a malfunction can be stored.

The above and other objects, features, aspects and advantages of the disclosure will become apparent from the following detailed description relating to the invention, taken in conjunction with the attached drawings.

### BRIEF DESCRIPTION OF THE DRAWINGS

Fig. 1 is a schematic view showing the basic configuration of an information processing system according to a first embodiment.
Fig. 2 is a diagram showing an example of a display screen of a programmable display device according to the first embodiment.
Fig. 3 is a diagram showing an example of a device monitoring screen.
Fig. 4 is a diagram showing an example of functional configurations of the programmable display device according to the first embodiment.
Fig. 5 is a diagram showing an example of the data structure of an access history.
Fig. 6 is a diagram showing an exemplary screen of the programmable display device at the time of repair work.
Fig. 7 is a diagram showing an exemplary screen of the programmable display device at the time of repair work.
Fig. 8 is a diagram showing an exemplary screen of the programmable display device at the time of repair work.
Fig. 9 is a diagram showing an exemplary screen of the programmable display device at the time of repair work.
Fig. 10 is a diagram showing an example of a program monitoring screen.
Fig. 11 is a flowchart representing processing for recording a troubleshoot.
Fig. 12 is a flowchart representing processing for executing a recorded troubleshoot.
Fig. 13 is a block diagram showing main hardware configurations of the programmable display device according to the first embodiment.
Fig. 14 is a schematic diagram showing the basic configuration of an information processing system according to a second embodiment.

### DETAILED DESCRIPTION

Hereinafter, embodiments according to the present invention will be described, with reference to the drawings. In the following description, the same reference signs are given to components and constituent elements that are the same. The names and functions thereof are also the same. Accordingly, detailed descriptions thereof will not be reiterated.

### First Embodiment

### A. Information processing system 1

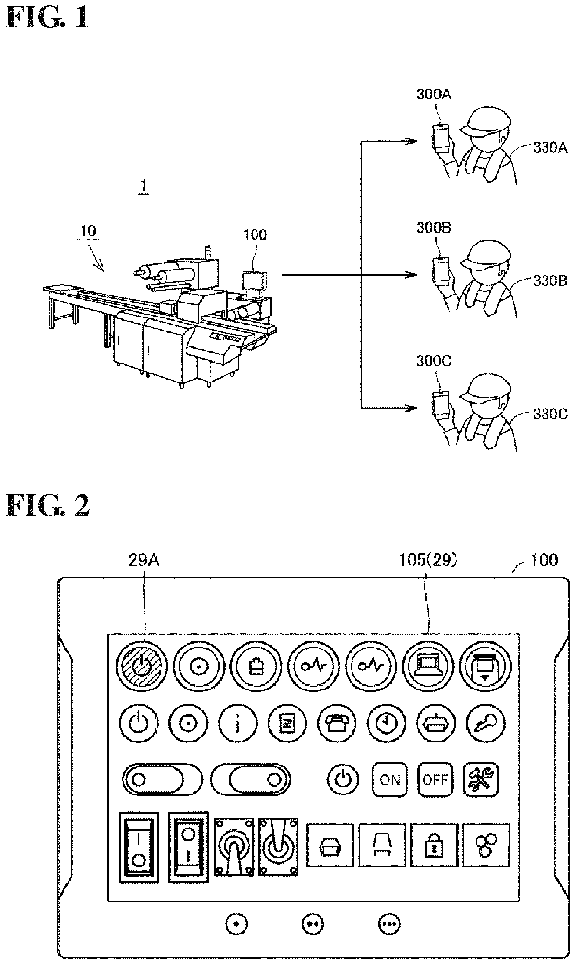

The basic configuration of an information processing system 1 according to the present embodiment will be described, with reference to Fig. 1. Fig. 1 is a schematic view showing the basic configuration of the information processing system 1 according to the present embodiment.

As shown in Fig. 1, the information processing system 1 is, for example, constituted by a production apparatus 10 and mobile communication terminals 300A to 300C.

Although an example in which the information processing system 1 is constituted by one production apparatus 10 is shown in Fig. 1, the information processing system 1 may be constituted by a plurality of production apparatuses 10. In this case, the information processing system 1 may also further include a server capable of communicating with the plurality of production apparatuses 10.

Hereinafter, "mobile communication terminal 300" will also be used to representatively refer to at least one of the mobile communication terminals 300A to 300C. Although mobile communication terminals 300 serving as smartphones are shown in Fig. 1, the mobile communication terminals 300 are not limited to smartphones. As an example, the mobile communication terminals 300 may be tablet terminals or may be other mobile devices provided with a communication function.

The production apparatus 10 is installed in a factory or the like and produces various products. The production apparatus 10 includes a programmable display device 100 serving as an information processing apparatus. The programmable display device 100 may be constituted integrally with the production apparatus 10, or may be constituted separately from the production apparatus 10.

The programmable display device 100 acts as a GUI (Graphical User Interface) in an HMI (Human Machine Interface) environment. The programmable display device 100 is provided with an operation unit such as a touch panel, a display unit such as a liquid crystal display, and a communication unit for communicating with other communication terminals. The communication unit of the programmable display device 100 realizes communication with a PLC (Programmable Logic Controller) for controlling the production apparatus 10 and the mobile communication terminals 300A to 300C of repair persons 330A to 330C, for example.

Fig. 2 is a diagram showing an example of a display screen of the programmable display device 100. A monitoring screen 29 representing the states of the various configurations of the production apparatus 10 is displayed on a display 105 of the programmable display device 100. The monitoring screen 29 is constituted by a plurality of part images. Each of the part images represents the state of the corresponding configuration (e.g., power supply, switches, sensors, etc.) within the production apparatus 10. As an example, a part image 29A represents the state of the power supply. When the power supply is in an ON state, the part image 29A is illuminated, and when the power supply is in an OFF state, the part image 29A is extinguished. An operator is able to check the state of the various configurations within the production apparatus 10, by checking the monitoring screen 29.

Also, the operator is able to operate the various configurations of the production apparatus 10, by operating the various part images on the monitoring screen 29. As an example, the operator is able to switch the power supply of the production apparatus 10 ON/OFF, by touching the part image 29A.

### B. Memory watch function

The programmable display device 100, by monitoring events that occur in the production apparatus 10, which is the monitoring target, monitors phenomena (e.g., malfunctions, etc.) that occur in the production apparatus 10. In the case where an event to be notified occurs in the production apparatus 10, the programmable display device 100 notifies the occurrence of the event to a repair person. The repair person, having received the notification, repairs the production apparatus 10.

As an example of a repair mode, the repair person uses the memory watch function with which the programmable display device 100 is equipped. When the memory watch function is executed, the programmable display device 100 displays a device monitoring screen. The repair person specifies a reference destination within the memory on the device monitoring screen, and judges whether each component (e.g., sensors, switches, etc.) within the production apparatus is operating normally by checking the value in the memory at the reference destination.

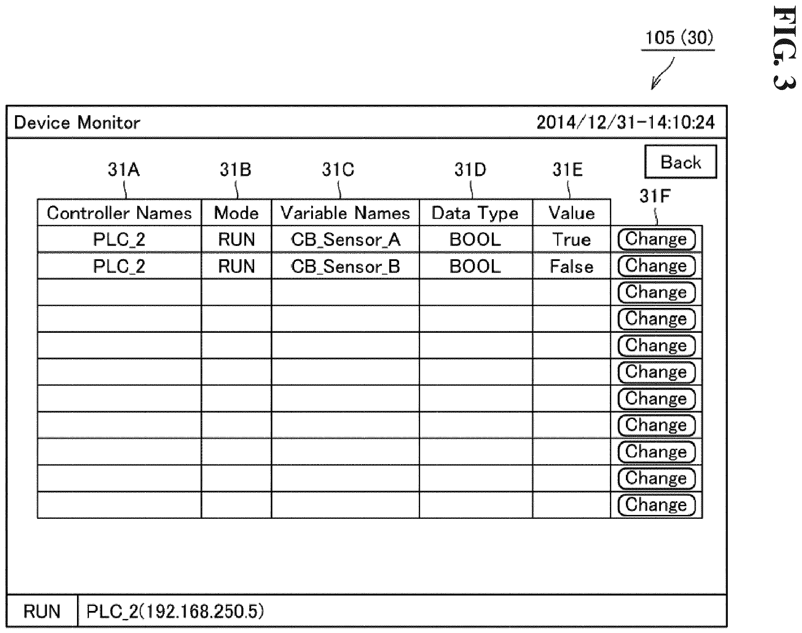

Fig. 3 is a diagram showing an example of the device monitoring screen. The display 105 of the programmable display device 100 displays a memory watch screen 30.

The memory watch screen 30 is constituted by, for example, items 31A to 31E and a button 31F. In the item 31A, the repair person is able to designate a controller (e.g., PLC) to be monitored. Controllers are devices for controlling the production apparatus 10. In the item 31B, the repair person is able to switch the watch function between enabled and disabled for every component designated in the item 31C. In the item 31C, the repair person is able to input an access destination within the memory, and is able to designate a component to be monitored. The access destination within the memory is represented with a variable name indicating a name of the component to be monitored or an address at which the state of the component is indicated. In the item 31D, a data type of the variable representing the state of the component to be monitored is displayed. In the item 31E, a value of the variable representing the state of the component to be monitored is displayed. The repair person is able to change the input value in the items 31A to 31C, by pressing the button 31F.

The repair person is able to check the state of the component designated in the item 31C, by checking the value that is shown in the item 31E, in a state where the production apparatus 10 is being operated. The access destination that the repair person adds to the item 31C is dependent on the repair person's own experience and knowhow. If this repair process is shared between repair persons, even a repair person with no knowledge will be able to deal with various malfunctions.

In view of this, the programmable display device 100 monitors the access destination referenced in a storage device (first storage device) within the controller after a predetermined event indicating a malfunction is detected, and stores this access destination in association with the event that has occurred. This access destination may be stored in an internal storage device (second storage device) of the programmable display device 100, or may be stored in an external storage device (second storage device) of a server or the like as will be described in a "second embodiment". The programmable display device 100 stores, for example, setting information set on the memory watch screen 30. The access destination within the storage device of the controller referenced at the time of a malfunction is thereby stored. The programmable display device 100 reflects the setting information that is associated with the event on the memory watch screen 30, when a similar event (malfunction) newly occurs. The repair person is able to refer to the access destination within the memory referenced at the time of the last repair work.

### C. Functional configurations of programmable display device 100

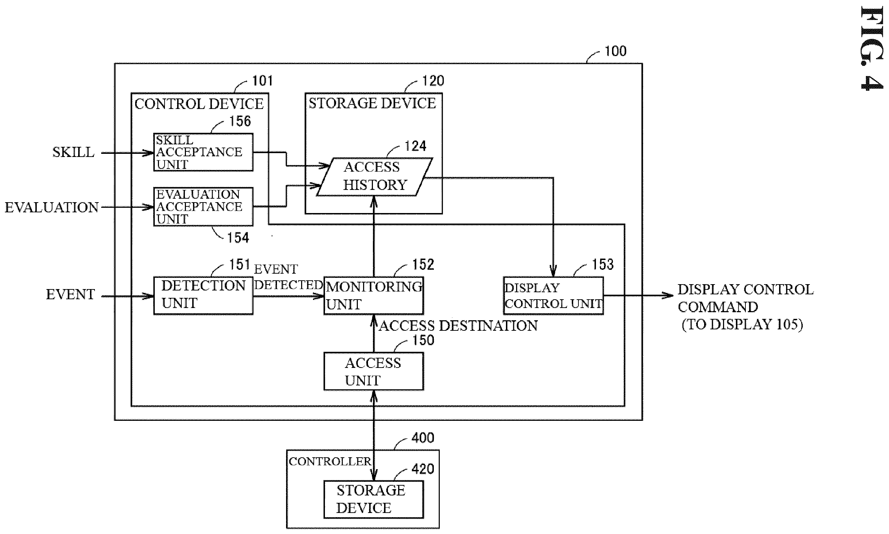

Functional configurations of the programmable display device 100 will be described, with reference to Fig. 4. Fig. 4 is a diagram showing an example of functional configurations of the programmable display device 100. The programmable display device 100 is configured to be communicable with a controller 400 for controlling the production apparatus 10.

The programmable display device 100 includes a control device 101 and a storage device 120 as main hardware configurations. The control device 101 includes an access unit 150, a detection unit 151, a monitoring unit 152, a display control unit 153, an evaluation acceptance unit 154, and a skill acceptance unit 156 as functional configurations.

The access unit 150 is able to access information within a storage device 420 (first storage device) of the controller 400 which is an external storage device. As an example, the access unit 150 accesses information within the storage device 420 via the abovementioned memory watch screen 30 (see Fig. 3) or the like. The access destination that is accessed by the access unit 150 is output to the monitoring unit 152. This access destination is, for example, represented as an address within the storage device 420.

The detection unit 151 monitors events that occur in the production apparatus 10, and detects predetermined events. Events to be detected may be registered in advance or may be suitably set by the user. Events to be detected may be not only phenomena that clearly indicate the malfunction of the production apparatus 10 but also phenomena that suggest the malfunction of the production apparatus 10. The detection unit 151, upon detecting a predetermined event which is a detection target, outputs the fact that this event has been detected to the monitoring unit 152.

The monitoring unit 152 monitors the access destination within the storage device 420 that is accessed by the access unit 150 after an event to be detected is detected by the detection unit 151. Preferably, this monitoring processing is started at a predetermined timing after the event to be detected is detected. As an example, the start timing of this monitoring processing includes the timing at which the memory watch function is started and the timing at which an operation to start the monitoring processing is accepted. The monitoring unit 152 writes the access destination obtained as a monitoring result to an access history 124 in association with the detected event.

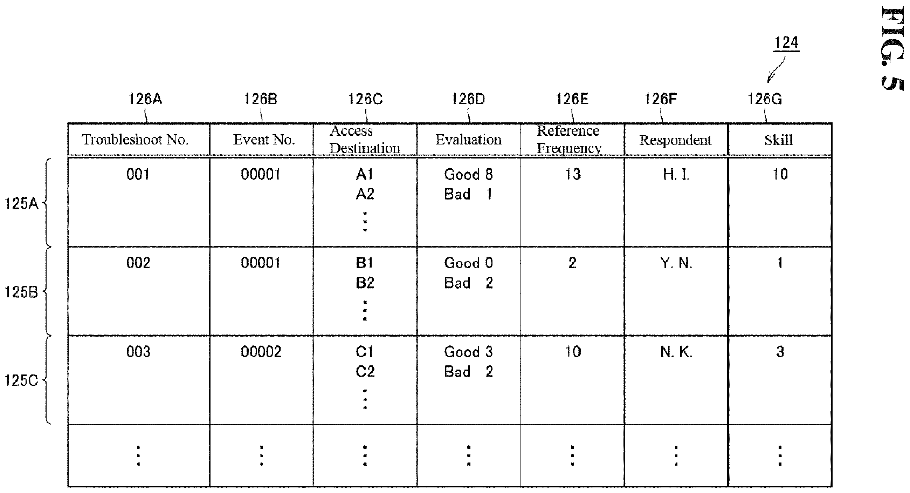

Fig. 5 is a diagram showing an example of the data structure of the access history 124. As shown in Fig. 5, the access history 124 includes access information 125A to 125C. Hereinafter, "access information 125" will be used to representatively refer to one of the access information 125A to 125C. In the access information 125, at least a troubleshoot number 126A, an event number 126B indicating the type of event and an access destination 126C within the memory are associated. Preferably, in the access information 125, an evaluation 126D of the access information, a reference frequency 126E of the access information and a respondent 126F to the event are further associated.

Referring again to Fig. 4, the display control unit 153, in the case where a troubleshoot for an event detected by the detection unit 151 is executed, specifies the access information 125 that is associated with the event, with reference to the access history 124, and displays access destinations that are included in this access information 125 on the display 105. The repair person is thereby able to refer to the access destination within the memory referenced at the time of past troubleshoots.

The evaluation acceptance unit 154 accepts an evaluation of the referenced troubleshoot. Input of the evaluation is realized with a mouse operation or with a touch operation on a touch panel. Typically, the repair person inputs a high evaluation (e.g., "Good", "Like", etc.), in the case where the troubleshoot referred to was helpful, and inputs a low evaluation (e.g., "Bad", etc.) in the case where the troubleshoot referred to was not helpful. The input evaluation is written to the evaluation 126D of the access history 124.

The skill acceptance unit 156 accepts input of a skill indicating an experience value of the user that accessed the memory after a predetermined event indicating a malfunction is detected. That is, the skill acceptance unit 156 accepts input of the skill of the user that generated the troubleshoot. Skill is, for example, represented numerically, with a larger numerical value indicating higher skill.

The timing at which input of a skill is accepted is arbitrary. For example, the skill acceptance unit 156 accepts input of a skill at the time at which the troubleshoot is generated. Alternatively, skill information defining a skill for every user may be formed into a database in advance, and the skill acceptance unit 156 may acquire the skill that is associated with the user that is currently logged in at the time of the occurrence of an event or the like. The skill accepted by the skill acceptance unit 156 is written to the skill 126G of the access history 124 in association with the event number 126B, the access destination 126C and the like.

Note that although an example was described in which the functional configurations shown in Fig. 4 are installed in the programmable display device 100, at least some of the functional configurations shown in Fig. 4 may be installed in the production apparatus 10, may be installed in a controller (e.g., PLC, etc.) that controls the production apparatus 10, may be installed in a server (not shown) that constitutes the information processing system 1, or may be installed in another information processing apparatus.

### D. Display screen of the programmable display device 100

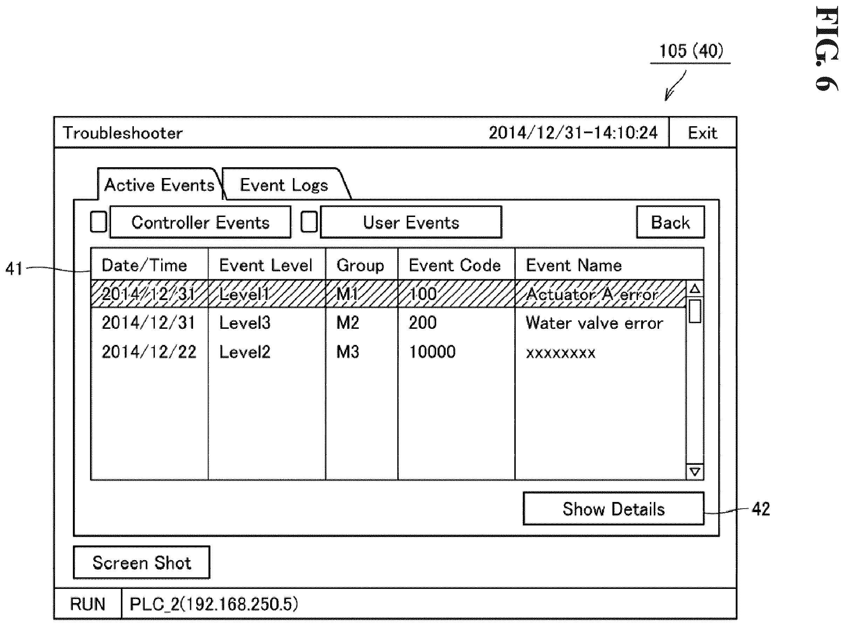

Screen transition of the programmable display device 100 at the time of repair work will be described, with reference to Fig. 6 to Fig. 9. Fig. 6 to Fig. 9 are diagrams showing exemplary screens of the programmable display device 100 at the time of repair work.

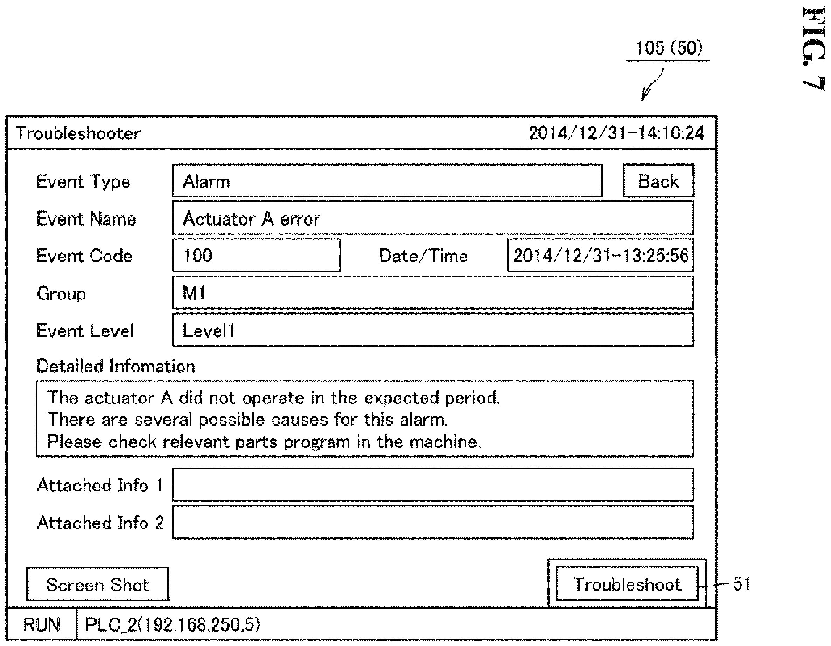

A confirmation screen 40 of events that have occurred in the production apparatus 10 is shown in Fig. 6. The confirmation screen 40 includes a list 41 of events. Events that have occurred are displayed in the list 41 in order of the date and time of occurrence. The repair person is able to check the details of each event, by pressing a details confirmation button 42 in a state where the respective event that is included in the list 41 is selected. As a result of the details confirmation button 42 being pressed, a details confirmation screen 50 shown in Fig. 7 is displayed.

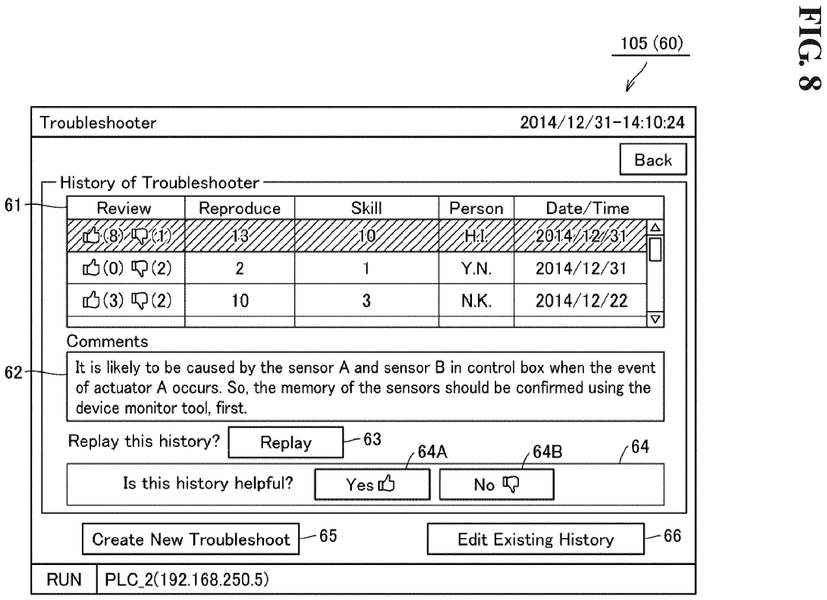

The details confirmation screen 50 displays a name of the event selected on the confirmation screen 40, a code number of the event, a date/time of occurrence of the event, a warning level of the event, a resolution method for the event, and the like. The repair person is able to check troubleshoots for dealing with the event selected on the confirmation screen 40, by pressing a troubleshoot button 51. As a result of the troubleshoot button 51 being pressed, a history screen 60 shown in Fig. 8 is displayed.

The history screen 60 includes a history field 61, a comments field 62, a button 63, an evaluation input field 64, and buttons 65 and 66. The history field 61 includes a list of troubleshoots for the event selected on the abovementioned confirmation screen 40.

In the history field 61, an evaluation, a reference frequency (reproduction frequency), a creator, and a creation date/time, skill indicating an experience value of the creator and the like are displayed with regard to each troubleshoot. As a result of the evaluation and the reference frequency for the troubleshoots being displayed, the repair person is able to comprehend the effectiveness of the respective troubleshoots at a glance. Also, as a result of the skill (e.g., years of experience, qualifications, etc.) of the creator of each troubleshoot being displayed, the repair person is able to distinguish the reliability of the troubleshoot at a glance.

Preferably, in the case where there are a plurality of troubleshoots for the event selected on the confirmation screen 40, the plurality of troubleshoots are displayed in order of evaluation or reference frequency. The repair person is thereby able to more quickly grasp the effectiveness of each troubleshoot.

The repair person is able to select any of the troubleshoots that are displayed in the history field 61. Comments input by the creator of the troubleshoot are displayed in the comments field 62.

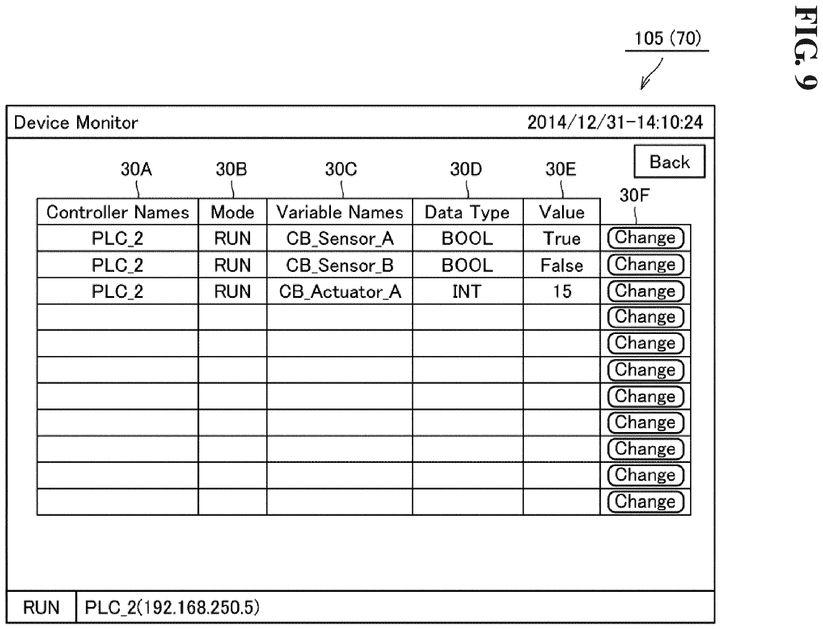

When the repair person presses the button 63 in a state of having selected one of the troubleshoots that are displayed in the history field 61, the programmable display device 100 specifies the access information 125 (see Fig. 5) that is associated with the selected troubleshoot, with reference to the access history 124 (see Fig. 5). The specified access information 125 is displayed on a memory watch screen 70 shown in Fig. 9. The selected troubleshoot is reproduced, as a result of the access destination (variable name, address, etc.) within the memory referenced at the time of a past troubleshoot thus being automatically reflected on the memory watch screen 70.

Referring again to Fig. 8, the repair person is able to input an evaluation of each troubleshoot in the evaluation input field 64. More specifically, the repair person first selects the troubleshoot to be evaluated, from among the troubleshoots that are displayed in the history field 61. In the case where the selected troubleshoot was helpful, the repair person presses a button 64A for inputting a high evaluation. In the case where the selected troubleshoot was not helpful, the repair person presses a button 64B for inputting a low evaluation. The input evaluation is reflected in the abovementioned access history 124.

The repair person is able to create a new troubleshoot, by pressing the button 65. As an example, the repair person is able to newly store an access destination within the memory added to the memory watch screen 70. Also, the repair person is able to input comments about the newly created troubleshoot. When a troubleshoot is newly created, the programmable display device 100 newly issues a troubleshoot number and writes the event number representing the type of event and the newly created troubleshoot to the access history 124 in association with the troubleshoot number.

The repair person is able to edit the contents of the troubleshoot selected in the history field 61, by pressing the button 66. As an example, the repair person is able to edit the access destination within the memory that is displayed at the time of execution of the troubleshoot and edit the comments about the troubleshoot. When editing of the troubleshoot is completed, the programmable display device 100 writes the edited troubleshoot to the access history 124 in association with the corresponding event number.

### E. Variations

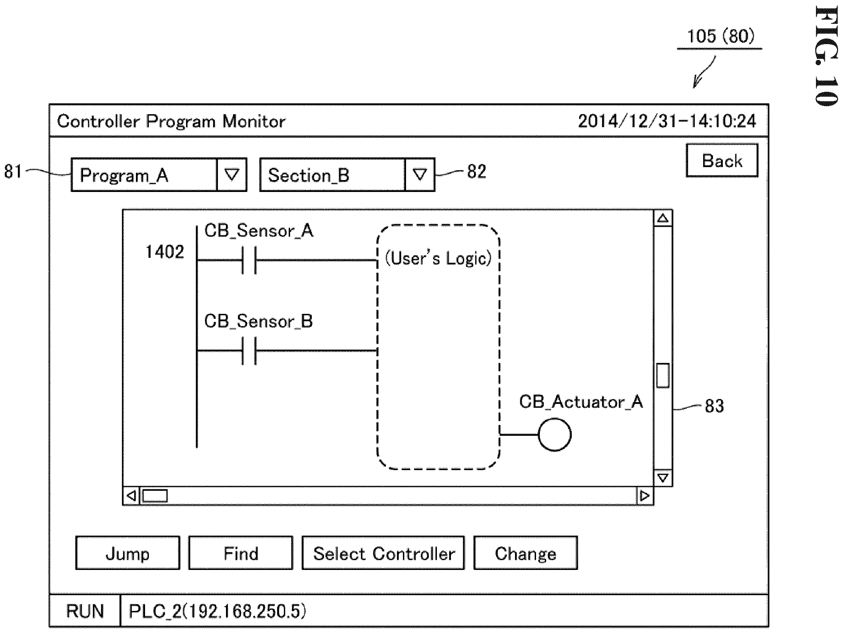

As another example of a repair mode, the repair person uses a program monitoring function with which the programmable display device 100 is equipped. When the program monitoring function is executed, the programmable display device 100 displays a program monitoring screen. Fig. 10 is a diagram showing an example of a program monitoring screen 80.

The repair person specifies the location of the malfunction of the production apparatus 10 and the like by checking the program (e.g., ladder program) that is displayed on the program monitoring screen 80. The reference destination of the program is dependent on the repair person's own experience and knowhow. Thus, if the debugging process of the program is shared between repair persons, even a repair person with no knowledge will be able to deal with various malfunctions.

In view of this, the programmable display device 100, by monitoring the access destination within the memory on the PLC referenced after a predetermined event indicating a malfunction is detected, specifies the access destination of the program that is installed in the controller, and stores this access destination in association with the event that has occurred. The access destination within the memory that is monitored by the programmable display device 100 thus includes not only an internal memory but also an external memory of a PLC or the like.

Typically, the programmable display device 100 stores setting information set on the program monitoring screen 80. The access destination of the program referenced at the time of a malfunction is thereby stored. That is, the access destination of the program referenced at the time of a malfunction is stored. The programmable display device 100 reflects the setting information that is associated with the event on the program monitoring screen 80, when the same event (malfunction) newly occurs. The repair person is thereby able to refer to the access destination of the program referenced at the time of the last repair work.

More specifically, when the repair person presses the button 63 is a state of having selected one of the troubleshoots that are displayed in the history field 61 of the abovementioned history screen 60 (see Fig. 8), the programmable display device 100 specifies the access information 125 (see Fig. 5) that is associated with the selected troubleshoot, with reference to the access history 124 (see Fig. 5). The specified access information 125 is displayed on the program monitoring screen 80 shown in Fig. 10. The selected troubleshoot is reproduced, as a result of the access destination of the program referenced at the time of a past troubleshoot thus being automatically reflected on the program monitoring screen 80.

As an example, in the setting information that is reflected at the time of execution of a troubleshoot, identification information 81 (e.g., filename) of the program, section information 82 of the program, a scroll position 83 of the program and the like are reflected. The place in the program that was monitored at the time of the troubleshoot is thereby displayed on the program monitoring screen 80.

Note that although a ladder program is shown on the program monitoring screen 80 in Fig. 10, another program that is usable by the controller of the production apparatus 10 may be displayed.

Also, although an example was described above in which the monitoring target at the time of event occurrence is a program installed on a PLC, a screen operation history of the programmable display device 100 or the like may be the monitoring target. More specifically, the programmable display device 100 monitors screen operations on the programmable display device 100, by monitoring the access destination of the internal memory referenced after a predetermined event indicating a malfunction is detected. The programmable display device 100 stores the screen operations in association with the event that has occurred. The screen operations on the programmable display device 100 are thereby stored as a troubleshoot.

### F. Control structure of the programmable display device 100

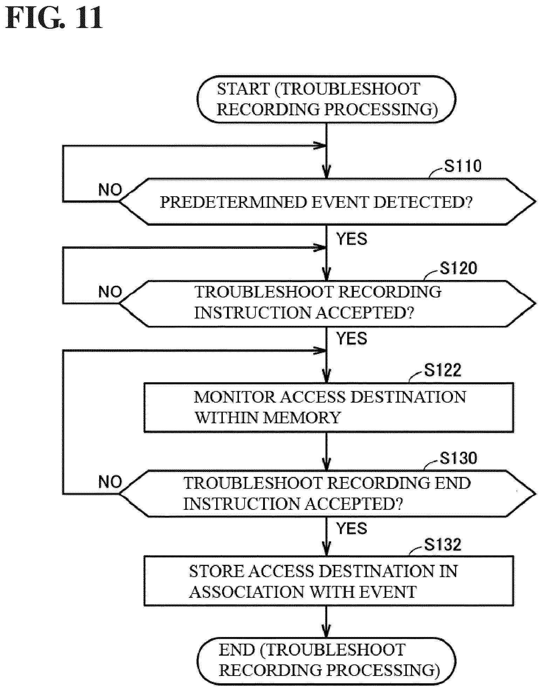

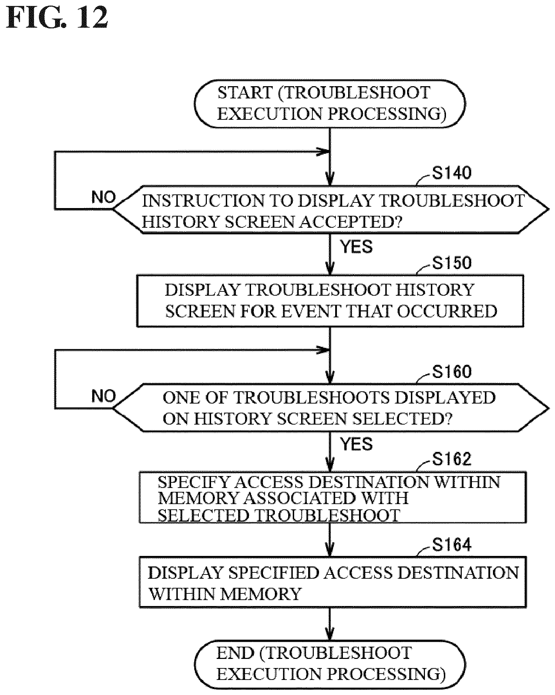

Processing for recording a troubleshoot and processing for executing a recorded troubleshoot will be described, with reference to Fig. 11 and Fig. 12. Fig. 11 is a flowchart representing processing for recording a troubleshoot. Fig. 12 is a flowchart representing processing for executing a recorded troubleshoot. The processing shown in Figs. 11 and 12 is realized by the control device 101 (see Fig. 4) of the programmable display device 100 executing a program. In another aspect, part or all of the processing may be executed by a circuit element or other hardware.

Hereinafter, processing for recording a troubleshoot shown in Fig. 11 and processing for executing a troubleshoot shown in Fig. 12 will be described in order.

### F1. Processing for recording a troubleshoot

First, processing for recording a troubleshoot will be described, with reference to Fig. 11.

In step S110, the control device 101, as the abovementioned detection unit 151 (see Fig. 4), judges whether a predetermined event to be detected has been detected. Events to be detected may be registered in advance or may be suitably set by the user. The control device 101 switches control to step S120, if it is judged that a predetermined event to be detected has been detected (YES in step S110). If this is not the case (NO in step S110), the control device 101 executes the processing of step S110 again.

In step S120, the control device 101 judges whether an instruction to record a troubleshoot has been accepted. As an example, the control device 101 judges that an instruction to record a troubleshoot has been accepted, based on having detected the pressing of the button 65 of the abovementioned history screen 60 (see Fig. 8). In step S120, the control device 101 switches control to step S122, if it is judged that an instruction to record a troubleshoot has been accepted (YES in step S120). If this is not the case (NO in step S120), the control device 101 executes the processing of step S120 again.

In step S122, the control device 101, as the abovementioned monitoring unit 152 (see Fig. 4), monitors the access destination within the storage device 420 of the controller 400. Typically, the control device 101 monitors the access destination within the memory that is set on the memory watch screen 30 (see Fig. 3) or the program monitoring screen 80 (see Fig. 10).

In step S130, the control device 101 judges whether an instruction to end recording of the troubleshoot has been accepted. As an example, the control device 101 judges that an instruction to end recording of the troubleshoot has been accepted, based on having accepted an operation for ending recording of the troubleshoot. The control device 101 switches control to step S132, if it is judged that an instruction to end recording of the troubleshoot has been accepted (YES in step S130). If this is not the case (NO in step S130), the control device 101 returns control to step S122.

In step S132, the control device 101 stores the access destination within the memory acquired at step S122, in association with the predetermined event to be detected. The access destination is written to the abovementioned access history 124 (see Fig. 5). The access history 124 may be stored in the internal storage device 120 (second storage device) of the programmable display device 100, or may be stored in an external storage device (second storage device) of a server or the like as will be described in a "second embodiment"

### F2. Processing for executing a troubleshoot

Next, processing for executing a recorded troubleshoot will be described with reference to Fig. 12.

In step S140, the control device 101 judges whether an instruction to display the troubleshoot history screen 60 (see Fig. 8) has been accepted. The control device 101 switches control to step S150, if it is judged that an instruction to display the troubleshoot history screen 60 has been accepted (YES in step S140). If this is not the case (NO in step S140), the control device 101 performs the processing of step S140 again.

In step S150, the control device 101, as the abovementioned display control unit 153 (see Fig. 4), displays the history screen 60 of troubleshoots for the event that has occurred in the production apparatus 10. At this time, the troubleshoots are displayed in order of evaluation. Alternatively, the troubleshoots are displayed in order of reference frequency.

In step S160, the control device 101 judges whether one of the troubleshoots that are displayed on the history screen 60 has been selected. As an example, the control device 101 switches control to step S162, if it is judged that one of the troubleshoots that are displayed on the history screen 60 has been selected (YES in step S160). If this is not the case (NO in step S160), the control device 101 performs the processing of step S160 again.

In step S162, the control device 101 specifies the access destination within the memory that is associated with the troubleshoot selected at step S160, with reference to the abovementioned access history 124 (see Fig. 5).

In step S164, the control device 101, as the abovementioned display control unit 153, displays the access destination within the memory specified at step S162 on the display 105 of the programmable display device 100. The repair person is thereby able to refer to the access destination within the memory referenced at the time of the last troubleshoot.

### G. Hardware structure of programmable display device 100

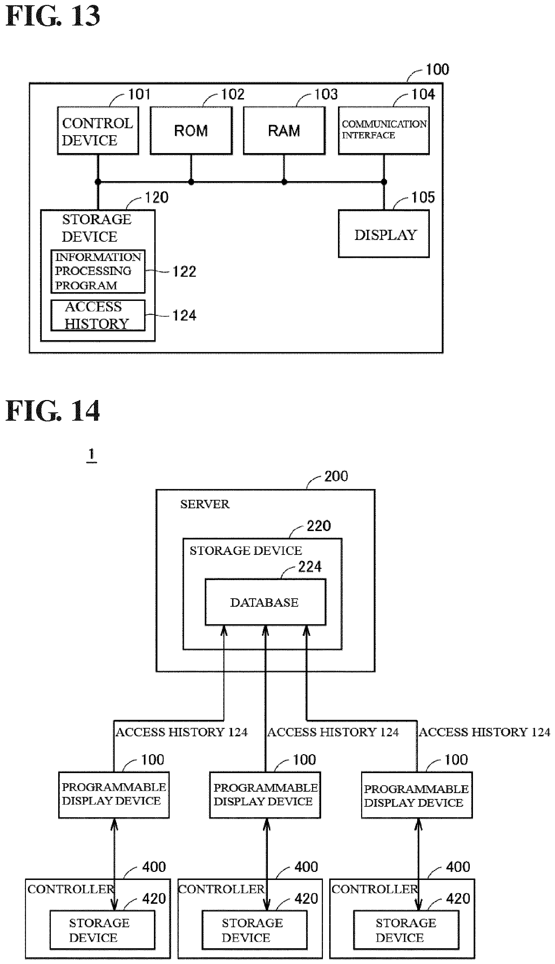

An example of hardware configurations of the programmable display device 100 will be described, with reference to Fig. 13. Fig. 13 is a block diagram showing the main hardware configurations of the programmable display device 100.

As shown in Fig. 13, the programmable display device 100 is provided with a control device 101, a ROM (Read Only Memory) 102, a RAM (Random Access Memory) 103, a communication interface 104, a display 105, and a storage device 120.

The control device 101 controls the programmable display device 100. The control device 101 is, for example, constituted by at least one integrated circuit. The integrated circuit is, for example, constituted by at least one CPU (Central Processing Unit), at least one ASIC (Application Specific Integrated Circuit), at least one FPGA (Field Programmable Gate Array), or a combination thereof.

The control device 101 controls operations of the programmable display device 100 by executing various types of programs such as an information processing program 122 according to the present embodiment. The control device 101 reads out the information processing program 122 from the storage device 120 to the ROM 102, based on having received an execution command for the information processing program 122. The RAM 103 functions as a work memory and temporarily stores various data required in execution of the information processing program 122.

An antenna (not shown) or the like is connected to the communication interface 104. The programmable display device 100 exchanges data with external communication devices via the antenna. External communication devices include, for example, a mobile communication terminal 300, a server or the like. The programmable display device 100 may be configured to be able to download the information processing program 122 from a server or the like.

The display 105 is, for example, a liquid crystal display, an organic EL (electroluminescence) display or other display device. The display 105 has a touch panel arranged thereon, and accepts various operations on the production apparatus 10 in which the programmable display device 100 is mounted with touch operations.

The storage device 120 is, for example, a storage medium such as a hard disk, a flash memory or an external storage device. The storage device 120 stores the information processing program 122 according to the present embodiment, the abovementioned access history 124 (see Fig. 5), and the like. The storage location of the information processing program 122 and the access history 124 is not limited to the storage device 120, and may be a storage area (e.g., cache memory, etc.) of the control device 101, the ROM 102, the RAM 103, an external apparatus (e.g., mobile communication terminal 300), or the like.

Note that the information processing program 122 may be provided by being incorporated in part of a suitable program, rather than as a standalone program. In this case, processing according to the present embodiment is realized in cooperation with the suitable program. Even with a program that does not include a module of such a part, this does not depart from the gist of the information processing program 122 according to the present embodiment. Furthermore, part or all of the functions that are provided by the information processing program 122 may be realized by dedicated hardware. Furthermore, the programmable display device 100 and the mobile communication terminal 300 may be configured to execute the information processing program 122 in cooperation with each other. Furthermore, the programmable display device 100 may be constituted in the form of a so-called cloud service in which at least one server executes part of the processing of the information processing program 122.

### H. Summary of first embodiment

By adopting the above configuration, the programmable display device 100 monitors the access destination within a memory referenced after a predetermined event indicating a malfunction is detected, and stores this access destination in association with the event that has occurred. The programmable display device 100 displays, as a troubleshoot, the access destination within the memory that is associated with the event, when the same event (malfunction) newly occurs. The repair person is thereby able to refer to the access destination within the memory referenced at the time of the last troubleshoot.

Such a troubleshoot is, in particular, effective in the case where the malfunction is not clear. As an example of a malfunction that is not clear, the case is envisioned where the production apparatus 10 is operating normally but the production operation is anomalous. Cases such as where produced goods of inferior quality are detected as normal or where a tester finds defective goods through visual inspection are given as examples. This is caused by the attachment angle of a sensor being misaligned or performance not being stably exhibited due to the adherence of grime. In order to detect such anomalies automatically and reliably, sensors for monitoring all states of components such as sensors and the like will be newly required. However, the programmable display device 100 according to the present embodiment only shares past troubleshoots between repair persons, and is thus able to deal with various anomalies of the production apparatus 10, without requiring the addition of such sensors. As a result, costs can be reduced.

Also, in recent years, the reduction in the labor force and the insufficient transference of knowhow have become social issues, and there are increasing cases of repair persons with little experience overseeing repair work. The programmable display device 100 according to the present embodiment is able to share experience and knowhow about repairing the production apparatus 10, and is thus able to solve such problems.

### Second Embodiment

### A. Overview

The programmable display device 100 according to the first embodiment monitors the access destination within a memory referenced after a predetermined event indicating a malfunction is detected, and stores this access destination in an internal memory as a troubleshoot. In contrast, the programmable display device 100 according to a second embodiment stores this access destination in an external server. Troubleshoots generated in various programmable display devices 100 are thereby collected on the server, and database of troubleshoots is generated.

Because the same configuration as the programmable display device 100 according to the first embodiment is adopted with regard to other points, description thereof will not be reiterated below.

### B. Information processing system 1

The information processing system 1 according to the second embodiment will be described, with reference to Fig. 14. Fig. 14 is a schematic diagram showing the basic configuration of the information processing system 1 according to the second embodiment.

As shown in Fig. 14, the information processing system 1 is, for example, constituted by a plurality of programmable display devices 100 (first information processing apparatuses) and a server 200 (second information processing apparatus). The programmable display devices 100 and the server 200 are configured to be communicable with each other. Note that although an example in which the information processing system 1 is constituted by the one server 200 is shown in Fig. 14, the information processing system 1 may be constituted by a plurality of servers 200.

Similarly to the above description, each of the programmable display devices 100 generates the abovementioned access history 124 (see Fig. 5) by monitoring the access destination within a memory referenced after a predetermined event indicating a malfunction is detected. Each of the programmable display devices 100 transmits the access history 124 to the server 200. The server 200 stores the access histories 124 received from the programmable display devices 100 in a database 224. The database 224 is, for example, stored in a storage device 220 of the server 200. The storage device 220 is a storage medium such as a hard disk, a flash memory or an external storage device, for example.

The programmable display device 100, in the case where a predetermined event indicating a malfunction is newly detected, transmits a request for acquisition of troubleshoots for dealing with the event to the server 200. When the acquisition request is received, the server 200 specifies corresponding troubleshoots, with reference to the database 224, and transmits the troubleshoots to the programmable display device 100. The programmable display device 100, upon receiving the troubleshoots from the server 200, displays the troubleshoots.

### C. Summary of second embodiment

By adopting the above configuration, the programmable display devices 100 according to the second embodiment monitors the access destination within a memory referenced after a predetermined event indicating a malfunction is detected, and transmit the predetermined event and this access destination to the server 200. The server 200 writes the access histories 124 received from the programmable display devices 100 to the database 224. Troubleshoots are thereby accumulated as a database, enabling the troubleshoots to be shared between the programmable display devices 100.

The disclosed embodiments are considered in all respects to be illustrative and not restrictive. The scope of the invention is indicated by the claims rather than by the foregoing description, and all changes that come within the meaning and range of equivalency of the claims are intended to be embraced therein.

## Claims

1. An information processing apparatus comprising:
an access unit configured to access information within an external first storage device;
a detection unit for detecting an event indicating a phenomenon that has occurred in a production apparatus; and
a monitoring unit for monitoring an access destination within the first storage device that is referenced by the access unit after a predetermined event is detected by the detection unit, and storing the access destination in an internal or external second storage device in association with the predetermined event.

2. The information processing apparatus according to claim 1, further comprising:
a display unit for displaying, in a case where a troubleshoot for the predetermined event is executed, the access destination associated with the predetermined event as the troubleshoot.

3. The information processing apparatus according to claim 2, further comprising:
an evaluation acceptance unit for accepting an evaluation of the troubleshoot,
wherein the display unit further displays the evaluation of the troubleshoot.

4. The information processing apparatus according to claim 3,
wherein the display unit, in a case where there are a plurality of troubleshoots for the predetermined event, displays the plurality of troubleshoots in order of the evaluations.

5. The information processing apparatus according to any one of claims 2 to 4,
wherein the display unit further displays a reference frequency of the troubleshoot.

6. The information processing apparatus according to claim 5,
wherein the display unit, in a case where there are a plurality of troubleshoots for the predetermined event, displays the plurality of troubleshoots in order of the reference frequencies.

7. The information processing apparatus according to any one of claims 1 to 6, further comprising:
a skill acceptance unit for accepting input of a skill of a user that accesses the first storage device after the predetermined event is detected,
wherein the monitoring unit further stores the accepted skill in the second storage device in association with the predetermined event and the access destination.

8. An information processing system comprising:
a plurality of first information processing apparatuses according to any of claim 1 to 7; and
a second information processing apparatus configured to be communicable with each of the plurality of first information processing apparatuses;
each of the plurality of first information processing apparatuses including:
a communication unit for transmitting the access destination to the second information processing apparatus in association with the predetermined event, and
the second information processing apparatus including:
a second storage device for storing the access destination received from each of the plurality of first information processing apparatuses and the predetermined event.

9. An information processing method in an information processing apparatus, the method comprising the steps of:
detecting an event indicating a phenomenon that has occurred in a production apparatus;
accessing information within a first storage device that is external to the information processing apparatus;
monitoring an access destination within the first storage device that is accessed in the step of accessing after a predetermined event is detected in the step of detecting; and
storing the access destination in a second storage device that is internal or external to the information processing apparatus in association with the predetermined event.

10. An information processing program to be executed by an information processing apparatus, the information processing program causing the information processing apparatus to execute the steps of:
detecting an event indicating a phenomenon that has occurred in a production apparatus;
accessing information within a first storage device that is external to the information processing apparatus;
monitoring an access destination within the first storage device that is accessed in the step of accessing after a predetermined event is detected in the step of detecting; and
storing the access destination in a second storage device that is internal or external to the information processing apparatus in association with the predetermined event.
